# EUROPÄISCHE PATENTANMELDUNG

(11) **EP 1 072 980 A2**
(43) Veröffentlichungstag der Anmeldung: **31.01.2001**
(21) Anmeldenummer: 00110874.5
(22) Anmeldetag: 23.05.2000
(51) Int. Cl.: G06F 13/42

(54) **Verfahren zur Adressierung von Teilnehmern eines Bussystems**

(30) Priorität: 27.07.1999 DE 19935192
(71) Anmelder: Moeller GmbH, 53115 Bonn (DE)
(72) Erfinder: Heller, Franz, 53757 St. Augustin (DE); Klaes, Gernot, 53562 St. Katharinen (DE)

(57) **Zusammenfassung**

Die Erfindung betrifft ein Verfahren zur Adressierung von Busteilnehmern,die Ausgestaltung eines Busteilnehmers, der geeignet ist, über ein derartiges Verfahren adressiert zu werden sowie ein Bussystem mit einem derartigen Teilnehmer.
Die Slave-Teilnehmer des erfindungsgemäßen Bussystems weisen eine Logikeinheit, einen Adressleitungseingang und einen Adressleitungsausgang auf. Dabei wird das, in der seriellen Reihenfolge ausgehend von einem Master an erster Stelle angeordnete Slave, über eine insbesondere einadrige Adressleitung von dem Master an seinem Adressleitungseingang mit einem Aktivierungssignal angesteuert und damit adressierungsbereit geschaltet. Nach erfolgter Adressierung schaltet die Logikeinheit des ersten Slaves das Adressierungssignal auf seinen Adressleitungsausgang und damit auf den Adressleitungseingang des Folgeslaves weiter, so daß eine serielle Adressierung der Slaves erfolgt.

## Beschreibung

Die Erfindung betrifft ein Verfahren zur Adressierung von Teilnehmern eines Bussystems gemäß dem Oberbegriff des Anspruchs 1, Slave-Teilnehmer für ein Bussystem gemäß dem Oberbegriff des Anspruchs 4 sowie ein Bussystem gemäß dem Oberbegriff des Anspruchs 5.

Bei herkömmlichen Bussystemen bekommen die Slave-Teilnehmer ihre Adresse zum Beispiel über von Hand einstellbare Adressierungsschalter zugewiesen.

Weiterhin sind Bussysteme bekannt, bei denen die Slave-Teilnehmer über eine Vielzahl von Adressleitungen mit einem Mastergerät verbunden sind und jeder Slave-Teilnehmer über eine separate oder mehrere Adressleitung(en) angesprochen wird.

Der Erfindung liegt die Aufgabe zugrunde, ein Verfahren, ein Bussystem und Slave-Teilnehmer zu schaffen, die einen verminderten Hardwareaufwand und Platzbedarf von Systemkomponenten gewährleisten.

Ausgehend von einem Verfahren, Slave-Teilnehmern und einem Bussystem der eingangs genannten Art wird die Aufgabe erfindungsgemäß durch die kennzeichnenden Merkmale der unabhängigen Ansprüche gelöst, während in den abhängigen Ansprüchen vorteilhafte Weiterbildungen der Erfindung zu entnehmen sind. Durch die Erfindung erübrigt sich zusätzliche Hardware in Form von Adressierungsschaltern oder einer Vielzahl von Adressleitungen. Hierdurch kann das Bussystem bzw. deren Slave-Teilnehmer deutlich kleiner gebaut werden.
Desweiteren wird ermöglicht, Slave-Teilnehmer eines Bussystems in "plug and play"-Technik auszutauschen. Der Anwender selbst muß keine aufwendige Adressierung (z. B. einstellen der Adressierungsschalter) vornehmen. Durch den seriellen Aufbau des Systems (beginnend beim Master, aufsteigend entlang der Adressleitung) ist eine einfache Teilnehmeridentifizierung möglich. In einer bevorzugten Ausführungsform der Erfindung ist vorgesehen, daß der Master die vorgesehene Sollkonfiguration der Slaves des Bussystems von einem Host zugewiesen bekommt und in seinen nichtflüchtigen Speicher einliest. Durch Einschalten der Versorgungsspannung für das Bussystem (Aktivierung des Bussystems), werden dann die einzelnen Verfahrensschritte gemäß dem erfindungsgemäßen Verfahren durchgeführt. Alternativ ist aber auch möglich, daß der Master mit Aktivierung des Bussystems die einzelnen Istkonfigurationen aus den angeschlossenen Slaves selbst einliest und anschließend die Adressierung gemäß dem erfindungsgemäßen Verfahren durchführt.

Weitere Einzelheiten und Vorteile der Erfindung ergeben sich aus dem folgenden, anhand von Figuren erläuterten Ausführungsbeispiel. Es zeigen
- Figur 1:: den schematischen Aufbau eines erfindungsgemäßen Bussystems,
- Figur 2:: den schematischen Aufbau einer Buslogik (Logikeinheit);
- Figur 3:: ein Flußdiagramm für das erfindungsgemäße Adressierungsverfahren.

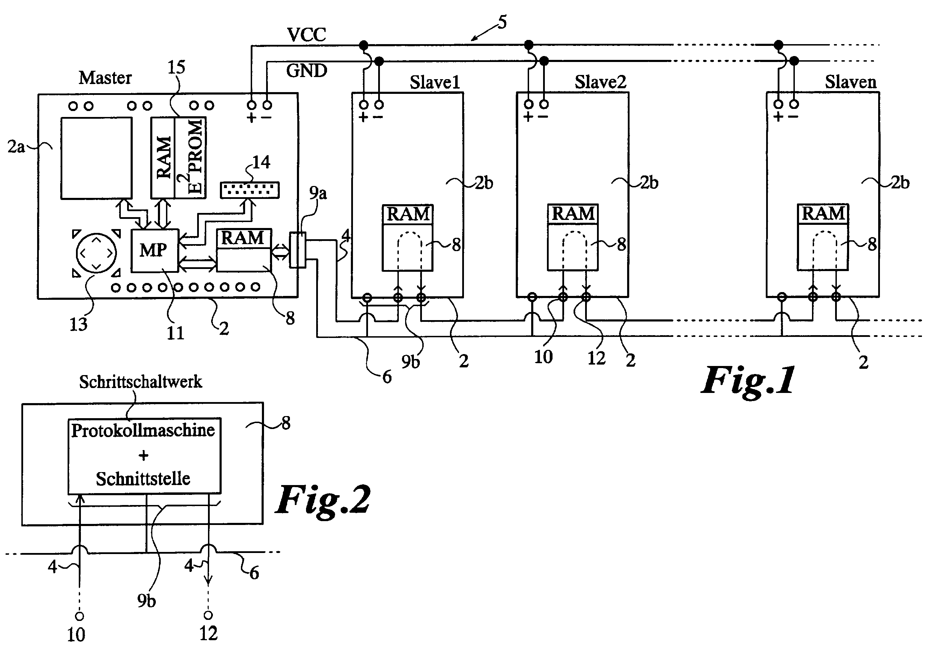

Fig. 1 zeigt den schematischen Aufbau eines Bussystems gemäß der Erfindung mit n+1 Teilnehmern 2. Die Teilnehmer 2 sind über eine vorzugsweise einadrige Adressleitung 4 in Serie hintereinandergeschaltet. Als Bezugspotential dient mit Vorteil die Bezugspotentialverbindung der Versorgungsleitung 5 der Teilnehmer 2. Eine zweiädrige Adressleitung 4 mit separater Bezugspotentialverbindung ist ebenfalls denkbar. Der, in der Kette zu Beginn angeordnete, Teilnehmer 2 ist als Master-Teilnehmer 2a (Master) ausgebildet. Der Master 2a kann hierbei z.B. in Form einer speicherprogrammierbaren Steuerung, eines Logikrelais, eines PC's oder dergleichen ausgebildet sein. Die Folgeteilnehmer sind als herkömmliche Slave-Teilnehmer (2b) (Slave) ausgebildet. In der Regel sind dies elektrische und elektronische Schalt-, Steuer- oder Visualisierungsgeräte jeglicher Art, wie Befehlsgeräte, Meldegeräte, Aktoren, Sensoren, Schütze, Leistungsschalter usw..

Zum Zwecke der Datenübertragung (Adress- und Prozessdaten) sind die Teilnehmer 2 parallel an eine Busleitung 6 angekoppelt. Jeder Teilnehmer 2 verfügt zumindest über eine Logikeinheit 8 zur Steuerung der Adressierungs- und Datenübertragungsvorgänge sowie zur Verwaltung von Adress- und Programmdaten, eine Schnittstelle 9a, 9b zum Anschluß über Adress- und Busleitung 4, 6 an andere Teilnehmer 2 und einen Speicherbereich zur flüchtigen und/oder nichtflüchtigen Ablage von Daten, Befehlen Adressen und dergleichen. Über die Schnittstelle 9a, 9b können auch weitere Verbindungen wie die Stromversorgung durch eine Versorgungspotentialverbindung und eine Bezugspotentialverbindung realisiert werden.

Jeder Teilnehmer 2, mit Ausnahme des Masters 2a, weist mindestens einen Adressleitungseingang 10 zum eingangsseitigen Anschluß der Adressleitung 4 und mindestens einen Adressleitungsausgang 12 zum ausgangsseitigen Anschluß der Adressleitung 4 auf. Der Master 2a benötigt lediglich einen Adressleitungsausgang 12 und keinen Eingang, da er nicht adressiert werden muß, sondern als "Ursprungsteilnehmer" die Vergabe der Slave-Teilnehmeradressen durchführt.

Fig. 2 veranschaulicht den schematischen Aufbau der Logikeinheit 8. Im dargestellten Ausführungsbeispiel ist die Logikeinheit 8 - auch als Protokollmaschine bekannt - durch eine gesteuerte Hardware realisiert. Hierfür ist insbesondere ein durch einen Mikrokontroller oder ein ASIC gebildetes Schrittschaltwerk vorgesehen. Der vorgesehene Mikrokontroller weist bereits die erforderliche Hard- und Software sowie die erforderliche Schnittstelle zum Anschluß von Adress- und Busleitung 4, 6 auf. Bei einer als ASIC ausgebildeten Logikeinheit 8 würden die bei einem Mikroprozessor als Software realisierten Funktionen ebenfalls als Hardware realisiert, also die gesamte Logikeinheit 8 als Hardware realisiert.
Wie der Detailausschnitt zeigt, ist die Busleitung 6 durchgehend ausgebildet und durch die Logikeinheit 8 durchgeschleift. Die Logikeinheit 8 greift hierbei parallel auf die Busleitung 6 zu.

Die Adressleitung 4 hingegen, wird von der Logikeinheit 8 "unterbrochen". Die Adressleitung 4 wird über den Adressleitungseingang 10 der Logikeinheit 8 zugeführt und in dieser entsprechend verarbeitet und gesteuert (durch gestrichelte Verbindung angedeutet). Über den Adressleitungsausgang 12 kann die Adressleitung 4 weitergeführt werden zum nächsten Slave-Teilnehmer 2b. Die Adressleitung 4 ist vorzugsweise als statische Signalleitung ausgebildet, die einmal beginnend beim Master 2a mit einem statischen Signal "aktiv" (hier. "logisch 0") belegt wird, und dieses Signal in Abhängigkeit von der Logikeinheit 8 des jeweils aktiv geschalteten Slaves 2b zur Aktivierung des jeweiligen Folgeslaves seriell schrittweise weitergeschaltet wird. So werden schrittweise nacheinander alle Slaves 2b über die Adressleitung 4 für die Adressierung aktiviert (freigeschaltet) und über die Busleitung 6 (jeweils der "aktive" Slave) adressiert.
Ist ein Slave 2b einmal in der Kette adressiert worden, ist er nicht mehr für Adressdaten zugänglich, sondern nimmt nur noch am Busdatenverkehr teil. Erst bei erneuter Aktivierung des Bussystems können alle Slaves 2b erneut adressiert werden.

In einer anderen Ausführung ist auch die Adressierung in dynamischer Form möglich. Hierbei wird die Adressierung durch ein zusätzliches Adressierungsprotokoll realisiert. Ein einmal aktivierter Slave 2b könnte somit unmittelbar nach Empfang des Aktivierungssignals auch über die Adressleitung 4 alle notwendigen Adressierungsdaten empfangen. Nach erfolgter Adressierung gibt er eine Rückmeldung an den Master 2a, legt intern einen Schalter um, so daß das folgende Aktivierungssignal samt Adressierungsdaten für den nachfolgenden Slave 2b auch diesem zukommt und eine Doppeladressierung des einmal adressierten Slaves 2b in diesem Adressierungsvorgang nicht erfolgt.

Die Adressierungsfunktion kann in einer möglichen Ausführungsform abschaltbar sein, so daß bei unveränderter Systemkonfiguration nicht bei jedem Neustart des System eine Adressierung durchgeführt werden muß. Um eine erhöhte Sicherheit zu gewährleisten, wird die Adressierung allerdings bevorzugt bei jedem Einschalten der Versorgungsspannung des Bussystems durchgeführt. So wird sichergestellt, daß das System auch immer mit der gewünschten Konfiguration arbeitet. Die verwendete Logikeinheit 8 ist von ihrem Aufbau her bei allen Teilnehmern 2 gleich ausgebildet.
Der Master 2a weist zusätzlich zu der Logikeinheit 8 noch eine weitere intelligente Einheit 11 in Form eines herkömmlichen Mikrokontrollers auf, wie er bei Mastergeräten wie speicherprogrammierbaren Steuerungen ohnehin vorhanden ist. Dieser Mikrokontroller veranlaßt die Logikeinheit 8 bei Aktivierung des Systems den Adressierungsvorgang gemäß nachfolgend beschriebenem Adressierungsverfahren zu initiieren.

Die Teilnehmer 2 können adress- und/oder busleitungsseitig über Kontaktverbindungen, wie Kabel- oder Steckverbindungen oder über kontaktlose Verbindungen, wie Infrarotverbindungen oder dergleichen gekoppelt bzw. verbunden werden.

Die Erfindung betrifft ferner einen Slave-Teilnehmer 2b für ein Bussystem, mit einer Logikeinheit 8, einem Speicherbereich für flüchtige und/oder nichtflüchtige Daten, und einer einen Adressleitungseingang 10 und einem Adressleitungsausgang 12 aufweisenden Schnittstelle 9b. Erfindungsgemäß ist ein derartiger Slave 2b derart ausgebildet ist, daß er durch Zuführung eines Aktivierungssignals auf seinen Adressleitungseingang 10, von einem passiven Zustand, in dem keine Adressierung möglich ist, in einen aktiven Zustand, in dem eine Adressierung möglich ist, überführbar ist. Dies wird dadurch erreicht, daß in Abhängigkeit von einem Eingangssignal am Adressleitungseingang 10, innerhalb der Logikeinheit 8 zwischen einem aktiven und einem inaktiven Zustand unterschieden werden kann, und in Abhängigkeit von dem Ergebnis dieser Unterscheidung, der jeweilige Slave 2b adressierbar geschaltet wird, ihm eine bestimmte Funktionalität (vorgesehene Funktion oder Dummyfunktion) zugewiesen wird, und das am Adressleitungseingang 10 anstehende statische Aktivierungssignal (Freischaltung des jeweils aktiven Slaves 2b, damit dieser adressierbar ist), an den Adressleitungsausgang 12 durchgeschaltet wird. Die Logikeinheit 8 steuert also nach vorgegebenen Kriterien, wie sie im anschließend beschriebenen Adressierungsverfahren detaillierter beschrieben sind, den Datenfluß zwischen Adressleitungseingang 10 und Adressleitungsausgang 12.

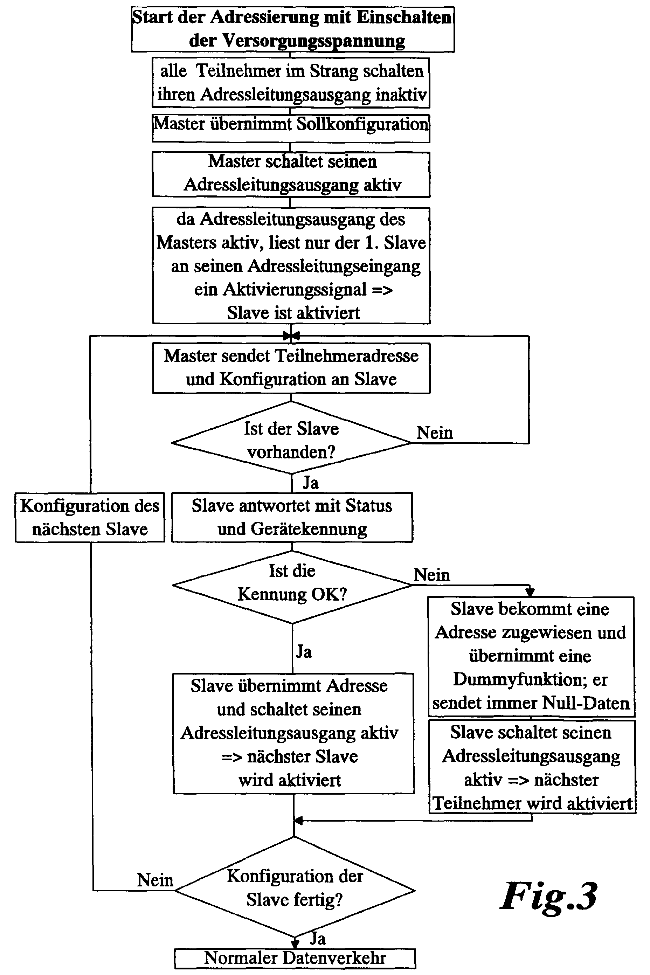

Der Adressierungsablauf wird durch das, in Fig. 3 in einem Flußdiagramm dargestellte, Verfahren zur Adressierung von Slave-Teilnehmern 2b eines Bussystems realisiert. Ein derartiges Bussystem umfaßt einen Master 2a und mindestens einen Slave 2b, die über eine Adressleitung 4 und eine Busleitung 6 miteinander verbunden sind. Dabei ist die Adressleitung 4 vorzugsweise einädrig ausgebildet. Die Busleitung 6 ist ebenfalls bevorzugt einädrig ausgeführt. Als gemeinsames Bezugspotential wird mit Vorteil die Bezugspotentialverbindung der Versorgungsleitung 5 verwendet.
In einer bevorzugten Ausführung werden die Teilnehmer 2 über eine einädrige Adressleitung zur Adressierungsfreischaltung (Teilnehmer für Adressierung "aktiv" oder "inaktiv"), eine einädrige Busleitung zur Datenübertragung (wie Befehls-, Programm- und Adressierungsdaten) und eine zweiädrige Versorgungsleitung 5 (Versorgungs- und Bezugspotential) miteinander verbunden. Um die Datensicherheit zu erhöhen, wird die Busleitung 6 vorzugsweise als zweiädrige, differentielle Datenübertragungsleitung ausgeführt.

Die Teilnehmer 2 sind, ausgehend von dem Master 2a, über die Adressleitung 4 in Serie hintereinandergeschaltet. Der Adressleitungsausgang 12 des Masters 2a ist mit dem Adressleitungseingang 10 des ersten Slaves 2b verbunden. Der Adressleitungsausgang 12 des ersten Slaves 2b führt auf den Adressleitungseingang 10 des zweiten Slaves 2b. Alle weiteren Slaves 2b werden in analoger Weise an das Bussystem angeschlossen und in aufeinanderfolgender Reihenfolge adressiert. Der Master 2a ist mit Vorteil durch eine speicherprogrammierbare Steuerung oder ein Logikrelais gebildet. Dem Master 2a wird, durch unmittelbare Eingabe über eine integrierte Bedieneinheit 13, oder ein über eine Programmierschnittstelle 14 anschließbares Programmiergerät oder einen PC, die gewünschte Sollkonfiguration eines Bussystemaufbaus mitgeteilt.

Mit Aktivierung des Bussystems, insbesondere durch Einschalten der Versorgungsspannung, schalten alle Slave-Teilnehmer 2b ihre Adressleitungen inaktiv (z.B. auf "logisch 1"). Mit Einschalten der Versorgungsspannung übernimmt der Master 2a die Sollkonfiguration aus seinem nichtflüchtigen Speicherbereich 15 vorzugsweise in den, in der Regel flüchtig ausgebildeten, Arbeitsspeicherbereich seiner Logikeinheit 8. Von hier aus (Logikeinheit 8), wird unmittlelbar anschließend die Adressierung der Teilnehmer 2b durchgeführt. Der Adressierungsvorgang erfolgt mit Vorteil völlig autonom durch die Logikeinheit 8.

In einer weiteren Ausführungsform erhält der Master 2a nach Einschalten der Versorgungsspannung die Sollkonfiguration des Bussystems indem er, insbesondere nacheinander, die einzelnen Istkonfigurationen der angeschlossenen Slaves 2b einliest und diese Konfiguration in seinen flüchtig ausgebildeten Arbeitsspeicher seiner Logikeinheit 8 ablegt.

Die Sollkonfiguration beinhaltet vorzugsweise Informationen über die Anzahl der Slaves 2b, die Datenmenge pro Zyklus für jeden Slave 2b, die Länge der zu übertragenden Datensätze (für Schreib- und Lesevorgänge), Angaben über den Slavetyp in Form einer Gerätekennung (z.B. Anzahl der Ein- und Ausgänge, Ein-/Ausgänge digital oder analog, ...) und Angaben über die genaue Position innerhalb des Bussystems (z.B. dritter Slave im Busstrang). Hat der Master 2a die Sollkonfiguration übernommen, schaltet er seinen Adressleitungsausgang 12 auf "aktiv" (hier: "logisch 0"). Da alle folgenden Slaves 2b in Serie dem Master 2a nachgeschaltet sind, liest nur der in der Kette an erster Stelle nach dem Master 2a angeordnete Slave 2b an seinem Adressleitungseingang 10 das Signal "aktiv" und schaltet in einen aktiven Zustand, in dem er adressierbar ist. Unmittelbar im Anschluß daran sendet der Master 2a, vorzugsweise über die Busleitung 6, eine Teilnehmeradresse und Konfigurationsdaten an den aktivierten Slave 2b. Ist kein Slave 2b vorhanden, sendet der Master 2a diese Daten in einer Endlosschleife. Ist ein Slave 2b vorhanden, antwortet dieser mit seinem Status und seiner Gerätekennung. Der Status umfaßt Informationen wie - Spannung vorhanden, - Watchdog arbeitet korrekt, - Slave nicht adressiert, usw.. Anschließend vergleicht der Master 2a die vom Slave 2b übermittelte Gerätekennung mit der für die Busstrangposition in der Sollkonfiguration vorgegebenen Gerätekennung.

Bei Übereinstimmung der Gerätekennungen wird der Slave 2b veranlaßt die zuvor gesendete Adresse zu übernehmen, bekommt die vorgesehene Funktionalität zugewiesen (indem die Prozessdaten dieses Slaves 2b als gültig gekennzeichnet werden) und schaltet seinen Adressleitungsausgang 12 und damit den Adressleitungseingang 10 des nächsten Slaves 2b auf "aktiv".

Liegt keine Übereinstimmung vor, wird der Slave 2b ebenfalls veranlaßt die zuvor gesendete Adresse zu übernehmen, bekommt aber in diesem Fall eine Dummyfunktion (oder auch Bindefunktion: indem die Prozessdaten dieses Slaves 2b als ungültig gekennzeichnet werden) zugewiesen. Um zwischen vorgesehener Funktion und Dummyfunktion (Bindefunktion) eines zu adressierenden Slaves 2b zu unterscheiden, wird ein zusätzliches Datenbit übertragen, welches im Falle einer ungültigen Gerätekennung gesetzt oder zurückgesetzt wird. Hierdurch werden die übertragenen Prozessdaten in Abhängigkeit vom Zustand des zusätzlichen Datenbit als gültig oder ungültig identifiziert. Nach erfolgter Adressierung (unabhängig davon, ob die Gerätekennung als gültig oder ungültig identifiziert worden ist) schaltet der Slave 2b seinen Adressleitungsausgang auf "aktiv" um die Adressierung der nachfolgenden Slaves 2b nicht zu blockieren. Dies hat zum Vorteil, daß eine weitere Adressierung gewährleistet ist, auch wenn z.B. einmal ein Slave 2b defekt sein sollte oder an der falschen Position montiert worden ist. So wird gewährleistet, daß die Adressierung auf jeden Fall abgeschlossen werden kann und das System zumindest eingeschränkt funktionsfähig ist. Die zu übertragenden Daten haben mit Vorteil eine Datenlänge von acht Bit (neun Bit mit Unterscheidung für gültige oder ungültige Prozessdaten). Diese Verfahrensweise wird durchgeführt, bis der letzte Slave 2b (Anzahl in Sollkonfiguration bekannt) adressiert ist. Im Anschluß an die Adressierung kann der normale Datenverkehr stattfinden (Inbetriebnahme des Systems).

Die Gültigkeit der Prozessdaten kann in einer weiteren Ausführungsform über den Status des jeweiligen Teilnehmers ermittelt werden.

Die Adressierung erfolgt vorzugsweise in asynchroner Arbeitsweise. Zusätzliche Anschlüsse für eine Taktsignalleitung sind nicht erforderlich.

In einer bevorzugten Ausführungsform des erfindungsgemäßen Bussystems wird der Master 2a durch eine programmierbare Kleinsteuerung gebildet, die in einem auf eine Hutschiene montierbaren Gehäuse folgende Bestandteile umfaßt: - eine Logikeinheit (z.B. Mikrokontroller), - ein Display, eine Bedieneinheit, - Signaleingänge und Signalausgänge sowie eine Logikeinheit 8 (zur Initiierung und Durchführung des Adressierungsverfahrens) und zumindest einen Adressleitungsausgang. Dabei sind Schaltfunktionen durch einen Benutzer über eine menügeführte Benutzeroberfläche auf dem Display programmierbar.

Die vorliegende Erfindung ist nicht auf die vorstehend beschriebenen Ausführungsformen beschränkt, sondern umfaßt auch alle im Sinne der Erfindung gleichwirkenden Ausführungsformen. So ist in einer anderen Ausführungsform der Erfindung vorgesehen, die Teilnehmer 2 über eine zusätzliche Taktsignaueitung miteinander zu verbinden und die Adressierung in synchroner Arbeitsweise durchzuführen.

## Patentansprüche

1. Verfahren zur Adressierung von Slave-Teilnehmern (2b) eines Bussystems mit mindestens einem Master-Teilnehmer (2a) und mit mindestens einem Slave-Teilnehmer (2b), wobei
- jeder Teilnehmer (2a, 2b) eine Logikeinheit (8), einen Speicherbereich und eine Schnittstelle (9a, 9b) umfaßt,
- die Teilnehmer (2a, 2b), ausgehend von dem Master-Teilnehmer (2a), über eine Adressleitung (4) in Serie hintereinander geschaltet sind, wobei der Master-Teilnehmer (2a) einen Adressleitungsausgang (12) und jeder Slave-Teilnehmer (2b) einen Adressleitungseingang (10) und einen Adressleitungsausgang (12) aufweist,
mit folgenden Verfahrensschritten:
I. mit Aktivierung des Bussystems schalten alle Slave-Teilnehmer (2b) ihren Adressleitungseingang (10) inaktiv,
II. der Master-Teilnehmer (2a) liest eine Sollkonfiguration für die Slave-Teilnehmer (2b) ein,
III. der Master-Teilnehmer (2a) schaltet den Adressleitungseingang (10) des ersten Slave-Teilnehmers (2b) aktiv, und
IV. der Master-Teilnehmer (2a) sendet Adressierungsdaten an den aktivierten Slave-Teilnehmer (2b),
V. der aktivierte Slave-Teilnehmer (2b) antwortet mit seinem Status und seiner Gerätekennung,
VI. der Master-Teilnehmer (2a) prüft die Gerätekennung, wobei er dem Slave 2b bei korrekter Gerätekennung die vorgesehene Adresse und die vorgesehene Funktionalität und bei falscher Gerätekennung die vorgesehene Adresse und eine Bindefunktion zuweist,
VII. der Slave-Teilnehmer (2b) übernimmt die ihm zugeordnete Adresse,
VIII. der Slave-Teilnehmer (2b) schaltet seinen Adressleitungsausgang (12) aktiv und damit den Adressleitungseingang (10) des nächsten Slave-Teilnehmers () aktiv, und
IX. Wiederholung der Verfahrensschritte IV. - VIII. bis alle Slave-Teilnehmer (2b) adressiert sind.

2. Verfahren nach Anspruch 1, dadurch gekennzeichnet, daß der Master (2a) die Sollkonfiguration aus seinem Arbeitsspeicher (15) einliest.

3. Verfahren nach Anspruch 1, dadurch gekennzeichnet, daß der Master (2a) durch Lesen der Istkonfigurationen aller an das Bussystem angeschlossener Slaves (2b) die Sollkonfiguration einliest.

4. Slave-Teilnehmer (2b) für ein Bussystem, mit einer Logikeinheit (8), einem Speicherbereich, einer Schnittstelle und einem Adressleitungseingang (10) und einen Adressleitungsausgang (12) **dadurch gekennzeichnet, daß** jeder Slave-Teilnehmer (2b) derart ausgebildet ist, daß er durch Zuführung eines Aktivierungssignals auf seinen Adressleitungseingang (10), von einem passiven Zustand, in dem keine Adressierung möglich ist, in einen aktiven Zustand, in dem eine Adressierung möglich ist, überführbar ist.

5. Bussystem mit mindestens einem Master-Teilnehmer (2a) und mit mindestens einem Slave-Teilnehmer (2b), wobei
- jeder Teilnehmer (2a, 2b) eine Logikeinheit (8), einen Speicherbereich und eine Schnittstelle umfaßt,
- die Teilnehmer (2a, 2b), ausgehend von dem Master-Teilnehmer (2a), über eine Adressleitung (4) in Serie hintereinander geschaltet sind, wobei der Master-Teilnehmer (2a) einen Adressleitungsausgang (12) und jeder Slave-Teilnehmer (2b) einen Adressleitungseingang (10) und einen Adressleitungsausgang (12) aufweist, und
- der Master-Teilnehmer (2a) über eine Konfiguration der anzuschließenden Slave-Teilnehmer (2b) verfügt,
**dadurch gekennzeichnet, daß** jeder Slave-Teilnehmer (2b) derart ausgebildet ist, daß dieser durch Zuführung eines Aktivierungssignals auf seinen Adressleitungseingang (10), von einem passiven Zustand, in dem keine Adressierung möglich ist, in einen aktiven Zustand, in dem eine Adressierung möglich ist, überführbar ist.
